(19) Europäisches Patentamt
European Patent Office
Office européen des brevets

(11) EP 2 960 205 A1

# (12) EUROPEAN PATENT APPLICATION

(43) Date of publication:
**30.12.2015 Bulletin 2015/53**

(51) Int Cl.:
***C01B 31/04*** *(2006.01)*

(21) Application number: **14173536.5**

(22) Date of filing: **23.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Solvay SA**
**1120 Bruxelles (BE)**

(72) Inventors:
- **BOBENRIETH, Alexis**
  **7000 Mons (BE)**
- **DUBOIS, Philippe**
  **7000 Mons (BE)**
- **RAQUEZ, Jean-Marie**
  **7000 Mons (BE)**
- **MEYER, Franck**
  **7000 Mons (BE)**
- **FREDERIX, Caroline**
  **7000 Mons (BE)**

(74) Representative: **Vande Gucht, Anne et al**
**Solvay S.A.**
**Intellectual Assets Management**
**Rue de Ransbeek, 310**
**1120 Bruxelles (BE)**

## (54) Stable aqueous graphene suspension and its use in producing graphene polymer nanocomposites

(57) The present invention relates to an aqueous graphene suspension comprising:
- a liquid suspension medium comprising more than 50% by weight of water with respect to the total amount of liquid suspension medium,
- at least one graphene material, and
- at least one anionic surfactant with a part thereof being present as functionalizing said graphene material,

wherein the weight percentage of anionic surfactant with respect to the amount of graphene material is at most equal to 100%.

It further relates to a process for preparing an aqueous chemically reduced graphene oxide suspension and to a process for manufacturing a graphene material-polymer nanocomposite, and more specifically a chemically reduced graphene oxide-polymer nanocomposite from an aqueous graphene material suspension, and more specifically an aqueous chemically reduced graphene oxide (CRGO) suspension and monomer(s), said process comprising at least the steps consisting in:
(A) an addition of monomer(s) to a suspension according the present invention, and
(B) a polymerization of said monomer(s) to yield said nanocomposite

Figure 2

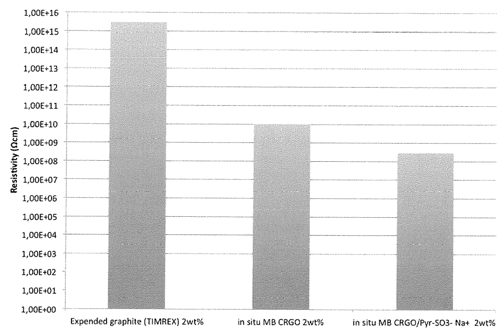


EP 2 960 205 A1

## Description

The present invention relates to an aqueous graphene suspension comprising:

- a liquid suspension medium comprising more than 50% by weight of water with respect to the total amount of liquid suspension medium,
- at least one graphene material, and
- at least one anionic surfactant with a part thereof being present as functionalizing said graphene material,

wherein the weight percentage of anionic surfactant with respect to the amount of graphene material is at most equal to 100%.

It further relates to a process for preparing an aqueous chemically reduced graphene oxide suspension and to a process for manufacturing a graphene material-polymer nanocomposite, and more specifically a chemically reduced graphene oxide-polymer nanocomposite from an aqueous graphene material suspension, and more specifically an aqueous chemically reduced graphene oxide (CRGO) suspension and monomer(s), said process comprising at least the steps consisting in:

(A) an addition of monomer(s) to a suspension according the present invention, and

(B) a polymerization of said monomer(s) to yield said nanocomposite.The present invention generally relates to the field of graphene nanoparticle-filled polymer composites. It more particularly relates to a process for producing such polymers having improved useful properties, such as mechanical, barrier and electrical properties, by using aqueous graphene suspension stabilized by at least one anionic surfactant.

The introduction of graphene (constitutive layers of pristine graphite) into a polymer matrix can markedly improve its properties. There has been a great interest in the last years to develop polymer nanocomposites filled with graphene nanosheets for getting better mechanical, thermal and/or conductive properties thereof

The manufacture of such composites with optimized performance requires that graphene sheets are produced on a sufficient scale, and that they are incorporated homogeneously in the polymer matrix.

One of the ways therefore is the preparation of chemically reduced graphene oxide-polymer composites to improve their conductivity. Indeed, this way appears to be more feasible than implementation of the preparation of conductive graphene-polymer composite, implying graphene produced via epitaxial growth on silicone carbide or CVD technique for example.

Moreover, in the framework of the research for enhancing the properties targeted by the applications using graphene, it is a constant concern to improve the dispersibility of graphene material, and in particular in liquids.

Graphite can be exfoliated in certain organic solvents, like N-Methyl-2-pyrrolidone, to give graphene dispersion. However, these solvents are expensive and require special care when handling, for security reasons. In addition, these solvents are difficult to completely remove due to high boiling points.

For all these reasons, producing a stable aqueous graphene suspension, and more particularly a chemically reduced graphene oxide (CRGO) suspension, would be of great interest.

The high surface energy of water does not allow to produce a stable dispersion of graphene materials with low oxygen content, like graphite, expanded graphite, graphene, GNP and RGO. Therefore, the use of surfactants is necessary. One liquid-phase method involves oxidation of graphite (for instance via the Hummers method) and subsequent exfoliation in water to form graphene oxide (GO) suspensions. As GO is not conductive, it must be reduced chemically (e.g. by hydrazine in solution) or thermally (in the powder form) by annealing at high temperatures in inert conditions to recover much of its electrical conductivity. By doing this, the final product, i.e. reduced graphene oxide (RGO), is again unstable in water.

A few works report on the exfoliation of graphite through non-covalent interactions between graphene sheets and pyrene derivatives, which can be seen as "nano-graphene units". The aromatic core of the molecule allows its intercalation and physisorption on the hydrophobic surface of graphene through pi-pi interactions, while appropriate functional groups attached to the molecule allows the electrostatic stabilization of graphene in the solvent. Pyrene, as it is, is not soluble in water. Different groups can be attached to pyrene to tune its solubility such as sulphonic groups ($SO_3$), carboxylic acid groups (COOH) or more complex groups generating aromatic amphiphiles.

The nature and number of the functional groups is important because the molecule must have a good affinity with the solvent, i.e. it needs to get sufficiently dissolved, but at the same time, the solvent has to allow hydrophobic interactions between graphene and the core of the molecule. One solution is to use a mixed solvent such as methanol and water: the first allows dispersion of the molecule in the solvent, while the second allows interactions between the molecule and graphene.

There are few examples of exfoliation of graphite by using only water.

Among the works that have been performed for developing approaches to stabilize graphene sheets in aqueous dispersion one may cite H. Yang et al., "A simple method for graphene production based on exfoliation of graphite in water using 1-pyrenesulfonic acid sodium salt", Carbon 53 (2013) 357-365; M. Zhang et al., "Production of Graphene Sheets by Direct Dispersion with Aromatic Healing Agents", small (2010), x, No. x, 1-8 and Y. Xu et al., "Flexible Graphene Films via Filtration of Water-Soluble Noncovalent Functionalized Graphene Sheets, J. AM. CHEM. SOC. 2008, 130, 5856-5857. The obtained suspension generally necessitates large amounts of surfactant. Moreover, the obtained graphene concentration in the suspension is low, preventing such suspensions to be implemented in the preparation of nanocomposites.

In By Qi Su et al., Composites of Graphene with Large Aromatic Molecules, Adv. Mater. 2009, 21, 3191-3195, Pyrene-1-sulfonic acid sodium salt (Pyr-$1SO_3$ and diasodium salt of 3,4,9,10-perylenetetracarboxylic diimide bisbenzenesulfonic acid (PDI) were selected to disperse graphene in water. They have large planar aromatic structures that strongly anchor them onto the hydrophobic surface of graphene sheets via pi-pi interactions without disruption of the electronic conjugation of graphene while the water-soluble moieties negatively charged act as stabilizing species to maintain a strong static repulsion force between the negatively charged reduced graphene sheets in solution. In a typical experimental procedure, graphite oxide was produced from natural graphite flake by a modified Hummer's method. To prepare a CRGO-pyrene, pyrene species and hydrazine monohydrate were added to GO aqueous dispersion. However, said document is not directed to the preparation of nanocomposites which implies specific technical constraints, in particular with respect to the amount of additive dedicated to the dispersion increase, i.e. the surfactant, which cannot be present in too high quantities in the final nanocomposites otherwise implying conductivity decrease. Moreover, the CRGO concentration as obtained in suspensions as described in said article is also too low to consider the nanocomposite preparation application.

The inventors have demonstrated that a polymer filled with graphene material may be obtained by intimate mixture of graphene material and monomers before promoting an *in situ* polymerization, by using an aqueous graphene suspension stabilized by an anionic surfactant.

This strategy presents the advantage to promote final composite graphene-polymer that displays an extremely good filler dispersion at the nanoscale, which is responsible for very good properties, like conductivity, mechanical or barrier.

One other advantage of this method lies in the fact that said aqueous suspension may be mixed with a polymer latex, to form an hybrid suspension. The final nanocomposite can be recovered in the form of a film by coating and drying the said hybrid suspension on a substrate or in the form of a bulk material, by promoting the coagulation of the polymer latex.

The present invention relates to an aqueous graphene suspension comprising:

- a liquid suspension medium comprising more than 50% by weight of water with respect to the total amount of liquid suspension medium,
- at least one graphene material, and
- at least one anionic surfactant with a part thereof being present as functionalizing said graphene material,

wherein the weight percentage of anionic surfactant with respect to the amount of graphene material is at most equal to 100%.

It further relates to a process for manufacturing an aqueous chemically reduced graphene oxide suspension (CRGO), said process comprising:

- forming an aqueous graphene oxide (GO) suspension comprising (i) graphene oxide, (ii) a liquid suspension medium comprising more than 50% by weight of water with respect to the total amount of liquid suspension medium, and (iii) at least one anionic surfactant, wherein the weight ratio between the anionic surfactant and the graphene oxide is less than 1, in particular ranges from 0.02 to 0.8, more particularly ranges from 0.05 to 0.2, then
- adding at least one reducing agent to the aqueous graphene oxide suspension, then
- optionally, heating at a temperature below or equal to 100°C.

The present invention extends to the stable aqueous chemically reduced graphene oxide (CRGO) suspension obtainable by the process according to the present invention.

For instance, the term « stable » denotes that the particles stay in suspension at least within 2 days, preferably within 1 week and more preferably within 4 weeks.

The present invention moreover covers a process for manufacturing a chemically reduced graphene oxide-polymer nanocomposite from chemically reduced graphene oxide (CRGO) and monomer(s), said process comprising at least the steps consisting in:

(A) an addition of monomer(s) to a suspension according the present invention or a suspension as obtained by the process according to the present invention, and
(B) a polymerization of said monomer(s) to yield said nanocomposite.

The present invention also relates to a nanocomposite obtainable by the process according to the present invention, in particular wherein the chemically reduced graphene oxide is present in the nanocomposite in an amount of less than 3% by weight, in particular of less than 2.5% by weight and more particularly equal or less than 2% by weight, with respect to the total weight of the nanocomposite.
The present invention is finally directed to a Masterbatch obtainable by the process according to the present invention, wherein the chemically reduced graphene oxide is present in the Masterbatch in an amount above 3% by weight, in particular ranging from 3 to 5% by weight, in particular from 5 to 10% by weight, for example from 10 to 20% by weight, with respect to the total weight of the Masterbatch.
Within the framework of the present invention, the term "filler" as used herein means the graphene material.

AQUEOUS GRAPHENE MATERIAL SUSPENSION

The general procedure that may be employed to prepare the aqueous graphene suspension according to the present invention is described hereinafter. Stabilization of the graphene material suspension may occur thanks to a functionalization of the graphene material by the anionic surfactant.
Within the framework of the present invention, the term "bonded form" for the anionic surfactant means that it is non-covalently linked with graphene sheets, more particularly *via* pi-pi interactions.
The term "functionalized form" for the graphene material means that it is non-covalently linked with the anionic surfactant, more particularly *via* pi-pi interactions.
Unless otherwise stated, the term "graphene material" as used herein encompasses the functionalized and non functionalized graphene material in dispersion in the aqueous suspension. Similarly, unless otherwise stated, the term "anionic surfactant" as used herein encompasses the bonded and free anionic surfactant. Therefore, with respect to the amounts the anionic surfactant weight denotes the total amount of anionic surfactant, in bonded and free form.
The anionic surfactant is typically added to the liquid suspension medium in excess with respect to the amount of anionic surfactant which will indeed serve to functionalize the graphene material. It follows that a part of said anionic surfactant stays in free form in the final aqueous suspension.
The inventors have indeed stated that depending on the specific couple anionic surfactant / graphene material, a maximum functionalization rate or level may be determined. For example for the couple as illustrated in the examples pyrenesulfonic acid sodium salt / chemically reduced graphene oxide, a maximum functionalization level equal to about 11 % has been measured.
The functionalization level is then used to designate the following weight ratio:

bonded surfactant weight/(bonded surfactant weight+ graphene material weight).

In this particular calculation, the "graphene material weight" means the weight of graphene material, which is not functionalized.
The weight percentage of anionic surfactant with respect to the amount of graphene material in the suspension according to the present invention is at most equal to 100% and may in particular range from 2 to 80%, and more particularly from 5 to 60%.
The aqueous graphene suspension comprises a liquid suspension medium comprising more than 50% by weight of water with respect to the total amount of liquid suspension medium. This means that the suspension medium may comprise another solvent that water, and in particular chloroform or an alcohol, such as ethanol and methanol.
Typically, water may be present in the liquid suspension medium in a content ranging from 50% to 100%, in particular from 70 to 100%, for example from 85 to 100% with respect to the total weight of the liquid suspension medium.
The nature of graphene material and the process to produce the present aqueous graphene material suspension are detailed herein after. According to a particular embodiment, graphene material is selected from graphene, nano-graphene platelets (NGP), graphene oxide (GO), reduced graphene oxide (RGO) *via* thermal reduction (TRGO) or chemical reduction (CRGO) and expanded graphite, and is preferably chemically reduced graphene oxide (CRGO).
Anionic surfactants are well known to the man skilled in the art.
In general, surfactants are composed of from 1 to 4 lipophilic moeities and from 1 to 4 hydrophilic moieties. Very often, the number of lipophilic moieties does not often exceed 2, and it is often equal to 1. Similarly, very often, the number of hydrophilic moieties does not exceed 2, and it is often equal to 1. Being anionic, the surfactants are characterized by the anionic nature of at least part of their hydrophilic moiety(-ies).
Then, the counter-ion of the anionic emulsifier is a cation, which is advantageously selected from ammonium

and alkali metal cations, in particular sodium, lithium and potassium; it is often sodium.

The at least one hydrophilic moiety is advantageously selected from the group consisting of sulfates ($-O-SO_3^-$), sulfonates ($-SO_3^-$), carboxylates [$-C(=O)O^-$] and mixtures thereof (as it is the case e.g. for sulfosuccinate-type emulsifiers).

A first class of anionic emulsifiers of interest in accordance with the present invention lies in carboxylates.

Usually, in carboxylates of formula R-C(=O)OX, R is $C_8$-$C_{20}$ alkyl or $C_8$-$C_{20}$ alkenyl (such as oleyl) and X is an ammonium or an alkali metal. As examples of alkyl carboxylates, it can be cited sodium laurate, ammonium myristate, sodium stearate.

Other carboxylates, based on a $C_8$-$C_{20}$ hydrocarbyl lipophilic moiety other than alkyl or alkenyl, can also be useful, for example sodium abietate.

A second class of anionic emulsifiers of interest in accordance with the present invention consists of sulfonates.

This second class includes primary alkyl or alkenyl sulfonates and secondary alkyl or alkenyl sulfonates. Usually, in primary alkyl sulfonates of formula $R-SO_3X$, R is $C_8$-$C_{20}$ alkyl and X is an ammonium or an alkali metal; as an example thereof, if can be cited $C_{16}H_{31}-SO_3Na$. In general, in secondary alkyl sulfonates of formula $R-CH(-SO_3X)-R'$, R and R' are $C_4$-C alkyl, the total number of carbon atoms of R and R' ranges from 7 to 29 and X is an ammonium or an alkali metal; as an example thereof, if can be cited $CH_3(CH_2)_n-CH(SO_3Na)-(CH_2)_m-CH_3$ wherein m+n=13.

Other sulfonates, based on a $C_8$-$C_{20}$ hydrocarbyl lipophilic moiety other than alkyl, can also be useful, for example:

- primary alkenyl sulfonates of formula $R-SO_3X$ wherein R is $C_8$-$C_{20}$ alkenyl and X is an ammonium or an alkali metal; among primary alkenyl sulfonates, it can be cited α-olefin sulfonates of formula $R-CH=CH-SO_3X$, wherein R is $C_6$-$C_{18}$ alkyl and X is ammonium or an alkali metal;
- alkylaryl sulfonates of formula $R-\varphi-SO_3X$ wherein φ is p-phenylene, R is $C_4$-$C_{20}$ alkyl (preferably $C_8$-$C_{16}$ alkyl) and X is ammonium or an alkali metal, and
- disulfonates, in particular disulfonates of formula

R-φ-O-φ-R'
 |     |
 Y    Y

wherein R and R' are independently C4-C20 alkyl, the total number of carbon atoms of R and R' ranges from 12 to 36, φ is a benzene trivalent radical, Y is $SO_3X$ and X is ammonium or an alkali metal; Dowfax® 2A1 can be cited as an example thereof

A third class of an anionic emulsifiers of interest in accordance with the present invention consists of sulfates, including alkyl sulfates and alkenyl sulfates. Usually, in sulfates of formula $R-OSO_3X$, R is $C_8$-$C_{20}$ alkyl or $C_8$-$C_{20}$ alkenyl (such as oleyl) and X is an ammonium or an alkali metal. As examples of alkyl sulfates, it can be cited sodium hexyl sulfate, sodium palmityl sulfate and sodium, ammonium or lithium lauryl sulfate.

A fourth class of anionic emulsifiers of interest in accordance with the present invention consists of sulfosuccinates. Monoalkyl sulfosuccinates are typically of formula

$$R-O-C(=O)-CH_2-CH(SO_3X)-C(=O)OX'$$

wherein R is $C_8$-$C_{20}$ alkyl and X and X' are independently ammonium or an alkali metal. Dialkyl sulfosuccinates are typically of formula

$$R-O-C(=O)-CH_2-CH(SO_3X)-C(=O)OR'$$

wherein R and R' are independently $C_4$-$C_{20}$ alkyl, the total number of carbon atoms of R and R' ranges from 8 to 40 and X is ammonium or an alkali metal. As examples thereof, it can be cited sodium di-[(2-ethyl)-hexyl]sulfosuccinate and sodium diisodecylsulfosuccinate.

A fifth class of anionic emulsifiers of interest in accordance with the present invention consists of sulfosuccinamates. Monoalkyl sulfosuccinamates are typically of formula

$$R-HN-C(=O)-CH2-CH(SO_3X)-C(=O)OX'$$

wherein R is $C_8$-$C_{20}$ alkyl and X and X' are independently ammonium or an alkali metal. Dialkyl sulfosuccinamates are

typically of formula

$$R\text{-}HN\text{-}C(=O)\text{-}CH_2\text{-}CH(SO_3X)\text{-}C(=O)OR'$$

wherein R and R' are independently $C_4$-$C_{20}$ alkyl, the total number of carbon atoms of R and R' ranges from 8 to 40 and X is ammonium or an alkali metal. Certain specialty sulfosuccinamates, such as tetrasodium N-(sulfosuccinyl)-N-stearyl-L-aspartate (commercially available as Rewopol B2003), include up to 4 hydrophilic moieties.

A sixth class of anionic emulsifiers of interest in accordance with the present invention consists of monoalkyl and dialkyl phosphates of respective formulae

R-O-P(=O)-$(OX)_2$ and $R_2$-O-P(=O)-OX wherein R is $C_4$-$C_{20}$ alkyl (preferably, $C_8$-$C_{20}$ alkyl) and X and X' are independently ammonium or an alkali metal.

Still other classes of anionic emulsifiers of interest in accordance with the present invention are:

- isethionates of formula R-C(=O)-O-$CH_2$-$CH_2$-$SO_3X$, wherein R is $C_8$-$C_{20}$ alkyl or $C_8$-$C_{20}$ alkenyl (such as oleyl) and X and X' are independently ammonium or an alkali metal;
- taurides of formula

$$\begin{array}{c} R\text{-}C(=O)\text{-}N\text{-}CH_2\text{-}CH_2\text{-}SO_3X, \\ | \\ R' \end{array}$$

  wherein R and R' are independently $C_4$-$C_{20}$ alkyl or $C_4$-$C_{20}$ alkenyl (such as oleyl), the total number of carbon atoms of R and R' ranges from 8 to 40 and X is ammonium or an alkali metal, and
- sarcosinates of formula R-C(=O)-N($CH_3$)-$CH_2$-COOX

wherein R is $C_4$-$C_{20}$ alkyl or $C_4$-$C_{20}$ alkenyl (such as oleyl) and X is ammonium or an alkali metal; preferably R contains at least 8 carbon atoms.

According to a particular embodiment, the anionic surfactant comprises (i) at least one hydrophobic moiety containing at least one, two or three fused benzene rings, (ii) at least one anionic hydrophilic moiety chosen among sulfonate, sulfate, carboxylate and mixtures thereof, and (iii) a monovalent cation.

According to one aspect of said embodiment, the anionic surfactant is chosen among any pyrene or perylene derivative that is soluble in water, and in particular chosen among 1-pyrenesulfonic acid sodium salt (Pyr-1$SO_3$), 1,3,6,8-pyrenetetrasulfonic acid tetrasodium salt (Pyr-4$SO_3$), and diasodium salt of 3,4,9,10-perylenetetracarboxylic diimide bisbenzenesulfonic acid (PDI).

According to a particularly preferred embodiment, the functionalized graphene material is CRGO/ Pyr-1$SO_3$.

The molecular weight of the ionic emulsifier is advantageously of at most 2000, preferably at most 1000, more preferably at most 650 and still more preferably at most 350 Besides, it is advantageously of at least 1500, preferably at least 1000, more preferably at least 550 and still more preferably at least 250.

The anionic surfactant in its bonded and free form may be present in the suspension in an amount at most equal to 1% by weight, in particular ranges from 0.001 to 1%, more particularly from 0.005 to 0.5%, and even more particularly from 0.01 to 0.1% with respect to the suspension weight.

According to a particular embodiment of the present invention, the weight percentage of anionic surfactant in bonded form with respect to total amount of anionic surfactant, i.e. in bonded and free form, is ranging from 5 to 100%, in particular from 10 to 30%.

According to another particular embodiment, graphene material, in fact the functionalized graphene material, for example functionalized CRGO, is present in an amount ranging from 0.01 to 0.5% by weight, in particular from 0.015 to 0.45% by weight, more particularly from 0.02 to 0.4% by weight relative to the total weight of the suspension.

According to another particular embodiment, for suspensions as directly obtained from the process according to the present invention, graphene material, in fact the functionalized graphene material, for example functionalized CRGO, is present in an amount ranging from 0.01 to 0.3% by weight, in particular from 0.015 to 0.25% by weight, more particularly from 0.02 to 0.2% by weight relative to the total weight of the suspension.

According to another particular embodiment, for functionalized CRGO purified suspensions as defined hereinafter, graphene material, in fact the functionalized graphene material, for example functionalized CRGO, is present in an amount ranging from 0.05 to 0.5% by weight, in particular from 0.75 to 0.45% by weight, more particularly from 0.1 to 0.4% by weight relative to the total weight of the suspension.

The determination of the weight percentage of anionic surfactant in bonded form with respect to the amount of

graphene material may be performed from a Thermal Gravimetric Analysis (TGA) measurement by heating the graphene material powder, recovered by filtration, washing and drying from the aqueous graphene material suspension, under flux of inert gas, as illustrated in the examples. The bonded anionic surfactant amount may be firstly measured from the graphene material powder that may be recovered by filtration, washing and drying from the aqueous graphene material suspension.

The amount of the free anionic surfactant may be measured by collecting the first filtrate and washing solutions obtained from successive washing steps performed on the powder. Such a measurement may be carried out by Inductively Coupled Plasma Atomic Emission Spectroscopy (ICP-OES).

GRAPHENE MATERIAL

Graphene itself is usually considered as a one-atom thick planar sheet of sp2-bonded carbon atoms that are densely packed in a honeycomb structure. The name graphene is derived from graphite and the suffix -ene. Graphite itself consists of a high number of graphene sheets stacked together.

Graphite, carbon nanotubes, fullerenes and graphene in the sense referred to above share the same basic structural arrangement of their constituent atoms. Each structure begins with six carbon atoms, tightly bound together chemically in the shape of a regular hexagon - an aromatic structure similar to what is generally referred to as benzene.

Perfect graphenes consist exclusively of hexagonal cells; pentagonal and heptagonal cells constitute defects in the structure. If an isolated pentagonal cell is present, the plane warps into a cone shape and the insertion of 12 pentagons would create a fullerene.

At the next level of organization is graphene itself, a large assembly of benzene rings in a basically planar sheet of hexagons that resembles chicken wire. The other graphitic forms are built up out of graphene. Buckyballs and the many other non tubular fullerenes can be thought of as graphene sheets wrapped up into atomic-scale spheres, elongated spheroids and the like. Carbon nanotubes are essentially graphene sheets rolled into minute cylinders. And finally, graphite is a thick, three-dimensional stack of graphene sheets; the sheets are held together by weak, attractive intermolecular forces (van der Waals forces). The feeble coupling between graphite sheets enables graphite to be broken up into miniscule wafers.

In the chemical literature graphene was defined officially in 1994 by the IUPAC (Boehm et al., Pure an Appl. Chemistry 66, 1893-1901 (1994)) as follows.

A single carbon layer of the graphitic structure can be considered as the final member of the series naphthalene, anthracene, coronene, etc. and the term graphene should therefore be used to designate the individual carbon layers in graphite intercalation compounds.

According to the IUPAC compendium on technology, the term graphene should only be used when the reactions, structural relations or other properties of individual layers are discussed, but not for three-dimensional structures.

In the literature graphene has also been commonly referred to as monolayer graphite.

One way to obtain graphene is to exfoliate it, i.e. to peel it off from graphite with an adhesive tape repeatedly. Graphene produced this way is, however, extremely expensive.

Another method is to heat silicon carbide to temperatures above 1100°C to reduce it to graphene. This process produces a sample size that is dependent upon the size of the SiC substrate used. However, again products obtained by this process are still very expensive.

Experimental methods have been reported for the production of graphene ribbons consisting of cutting open carbon nanotubes (Nature 2009, 367). Depending on the substrate used (single- or multi-walled nanotubes) single graphene sheets or layers of graphene sheets can be obtained. However, due to the fact that carbon nanotubes are very expensive materials, graphene products obtained this way are not commercially feasible as components of polymer compositions.

M. Choucair et al., Nature Nanotechnology 4, 30-33 (2009) disclose a process for producing gram quantities of graphene by the reduction of ethanol by sodium metal, followed by pyrolysis of the ethoxide product and washing with water to remove sodium salts.

Another way of obtaining graphene layers is *via* the oxidation of highly ordered graphite. This oxidation introduces oxygen-bearing functional groups into the graphite layers, which under suitable conditions may be deprotonated to a certain extent (or more or less completely), resulting in an electrostatic repulsion between the resulting negative charges of adjacent layers. After sonication, the graphite layers separate and a graphene oxide solution is obtained which may be put on a substrate and then reduced or may be reduced and then put on a substrate. A suitable process is e.g. described in ACS Nano 2008, 2(3), pages 463 to 470 (Becerril et al., Evaluation of solution processed reduced graphene oxide films as transparent conductors).

As used herein, the term:

- "graphene" relates to a single-atom-thick sheet of hexagonally arranged carbon atoms freely suspended or adhered

on a foreign substrate. The lateral dimensions are from hundreds nm to few microns.

- "nano-graphene platelets" (also called "graphite nanoplates", "graphite nanosheets" and "graphite nanoflakes") (NGPs) refer to an isolated single layer graphene sheet (single layer NGP) or to a stack of graphene sheets (multilayer NGP). Typically, without being limited thereto, graphene nanosheets are stacked on top of each other with a single sheet thickness of 3.37 A. The stacking can be up to 100 nm or even more (multi-layer NGP). The number of single layers in a NGP can be estimated from the stack thickness by dividing same by the thickness of a single graphene layer (which is considered as 0.34 nm). Thus, e.g. a NGP with a stack thickness of 2 nm comprises 6 single graphene layers. The aspect ratio of NGPs can generally cover a very broad range of from 1 to 60000 preferably of from 1 to 25000 and most preferably of from 1.5 to 5000. This aspect ratio applies for nano-graphene platelets in two dimensions and in this respect nano-graphene platelets differ from carbon nanotubes. For instance, the aspect ratio denotes the ratio L/d, wherein L is the lateral dimention and d is the stack thickness.

- "Graphite" is a thick, three-dimensional stack of graphene sheets, having a thickness superior to 100 nm.
- "Expanded graphite" is a multilayer made by partial exfoliation (thermal, chemical, or mechanical) of graphite into thin multilayer packets that retain the 3D crystal stacking of graphite. This is an operational definition based on the fabrication process. More precisely, expanded graphite means a graphite structure obtained for example by acidic treatment, in particular using $H_2SO_4$ or $HNO_3$ followed by a flash treatment in inert atmosphere, giving multi-layer graphene, typically exceeding 10 layers.
- "graphene oxide" (GO) means an oxidized graphene monolayer or few-layer material with a high oxygen content characterized by an oxygen content above 10 and less than 50% by weight, in particular close to 20% by weight.
- "reduced graphene oxide" (rGO) means a GO (as previously defined) reductively processed for example by thermal or a chemical treatment, but also by other treatments such as microwave, photo-chemical, photo-thermal or microbial/bacterial. The oxygen content is consequently reduced to a value at most equal to 10%, preferably below 5 and more preferably below 2%.
- "Carbon nanotubes" are on their side cylindrical nanostructures, wherein the walls are formed by one-atom-thick sheet of carbon and wherein the graphene layers are rolled at specific and discrete angles, giving for example single-walled nanotubes (SWNTs) and concentric tubes or multi-walled nanotubes (MWNTs).

As used herein the term "graphene material" encompasses graphene, NGP, graphite, expanded graphite, graphene oxide, RGO, carbon nanotubes. The term "graphene material" encompases also a mixture of different graphene materials as defined above.

With respect to NGPs, products are commercially available, for example from Angstron Materials LLC, other suppliers offering part of the range. A broad array of NGPs with tailored sizes and properties can be produced by a combination of thermal, chemical and mechanical treatments. NGPs are not obtainable as single layer NGPs only; single layer NGPs and multi-layer NGPs are always produced as a mixture.

With respect to graphene oxide, it may be produced according to known methods, and for example according to the Hummers method applied to expanded graphite as illustrated in the examples.

Reduced graphene oxide, TRGO and CRGO may also be produced according to known methods. With respect to CRGO, as it will be apparent herein after, its preparation may occur *in situ.*

The graphene material may be selected among said previously listed graphene types and is preferably rGO and in particular CRGO.

The specific surface area (SSA) of graphene material can vary over a wide range, but is generally higher than the specific surface area of standard graphite when measured under identical conditions. The specific surface area, as measured by the BET method (as described below), preferably exceeds 10 $m^2/g$, preferably 30 $m^2/g$ and, more preferably 100 $m^2/g$, and even more preferably 300 $m^2/g$.

Graphene material having high specific surface areas, preferably exceeding about 100 $m^2/g$ provide often beneficial effects in Young modulus and barrier properties when used to produce nanocomposites in accordance with the instant invention. The BET measurement can be carried out as follows:

The BET specific surface area is determined by gas adsorption on the ASAP2020 equipment from Micromeritics. Prior to the analysis, the graphene material is filled in a specific glass tube of $10cm^3$. Around 75% of the total volume of the tube is filled; this means that depending of the material density, the total mass of the sample can vary a lot, typically from 50 to 300 mg. The graphene material is then pretreated under vacuum (A) standardly at 110°C or (B) at 40-50°C in the case of oxidized graphene material, until a stable vacuum of 4 $\mu$bar has been reached. This step can last several hours. This second heating procedure (B) is applied to decrease at maximum the risk of reduction of the material, resulting in a mass loss and an artificially increase of the SSA.

The measurements are performed using nitrogen as adsorptive gas at 77K by volumetric method, according to the ISO 9277: 2010 (Determination of the specific surface area of solids by gas adsorption - BET method) standard.

The BET specific surface area is calculated, in the standard case (A) in a relative pressure ($P/P_0$) range from

0.05 to 0.2 or (B) in a relative pressure ($P/P_0$) range chosen so that the BET C constant is positive according to the annex C of the ISO 9277: 210 standard. The method described in this annex requires drawing the graph of na($1-P/P_0$) vs $P/P_0$ (with na the specific adsorbed quantity and $P/P_0$ the relative pressure).

The application of the BET equation should be limited to the pressure range where the quantity na($1-P/P_0$) continuously increases with $P/P_0$. The maximum $P/P_0$ value is thus the relative pressure for which the quantity na($1-P/P_0$) is maximum. At least five points equal and lower than the maximum $P/P_0$ value are chosen to apply the BET theory.

Furthermore, the graphene material according to the present invention may present different degrees of polarity, generally characterized by the oxygen content of the graphene surface.

In the particular embodiment where CRGO suspensions are prepared, the GO as initially used in the process may advantageously present an oxygen content ranging from 20 to 40%. Still according to said embodiment, the CRGO may advantageously present an oxygen content equal or less than 10%, preferably, less than 5%, and more preferably less than 2%.

PROCESS FOR PRODUCING AQUEOUS GRAPHENE SUSPENSION

The aqueous graphene material suspension according to the present invention may be performed by a process comprising at least the addition of at least one anionic surfactant and graphene material into a liquid suspension medium comprising more than 50% by weight of water with respect to the total amount of liquid suspension medium, the weight ratio between the anionic surfactant and graphene material being less than 1, in particular ranging from 0.02 to 0.8, more particularly ranging from 0.05 to 0.6.

The graphene material may be prepared in a previous step or commercial forms of said graphene material may also be used. As far as commercial forms of graphene material are concerned, they may typically be chosen among NGPs, GO or RGO as described above.

Alternatively, the graphene material may be formed *in situ.* Chemically reduced graphene oxide (CRGO) may for example be produced *in situ* for preparing the corresponding aqueous chemically reduced graphene suspension stabilized by anionic surfactant.

This embodiment is particularly preferred in the framework of the present invention. It is advantageous as far as the reduction and functionalization occur simultaneously. Conductivity is retrieved *via* the reduction step whereas dispersion stability is maintained in comparison to a GO suspension.

Moreover, as illustrated by the examples, high concentration of functionalized CRGO may be achieved in the aqueous suspension, that is interesting for providing improved properties to the polymer nanocomposites when using such high concentrated aqueous suspension of CRGO.

Whatever the graphene material, and in particular when it is chemically reduced graphene oxide, heating may be required to promote the functionalization and subsequent dispersion and stabilization. Said heating may typically be performed at a temperature below or equal to 100°C.

The present invention is more particularly dedicated to a process for manufacturing an aqueous chemically reduced graphene oxide suspension (CRGO), said process comprising:

- forming an aqueous graphene oxide (GO) suspension comprising (i) graphene oxide, (ii) a liquid suspension medium comprising more than 50% by weight of water with respect to the total amount of liquid suspension medium, and (iii) at least one anionic surfactant, wherein the weight ratio between the anionic surfactant and the graphene oxide is less than 1, in particular ranges from 0.02 to 0.8, more particularly ranges from 0.05 to 0.2, then
- adding at least one reducing agent to the aqueous graphene oxide suspension, then
- optionally, heating at a temperature below or equal to 100°C.

The reducing agent may be chosen among hydrazine, Vitamin C, $NaBH_4$, sodium sulfite, sodium thiosulfite, sodium formaldehyde sulfoxylate, ascorbic acid, hydriodic acid in combination with trifluoro acetic acid and thiourea dioxide.

According to a particular embodiment, the graphene oxide is present in said liquid suspension medium in an amount ranging from 0.03 to 0.2% by weight, in particular from 0.04 to 0.15% by weight, more particularly from 0.05 to 0.1 % by weight relative to the total weight of said suspension medium.

The present invention extends to the aqueous graphene oxide suspension useful for preparing the aqueous chemically reduced graphene suspension (CRGO) according to the invention.

More particularly, the invention thus covers an aqueous graphene oxide suspension useful for preparing the aqueous chemically reduced graphene suspension (CRGO) according to the present invention comprising:

- a liquid suspension medium as defined above,
- graphene oxide,

- at least one reducing agent, for example as defined above,
- at least one anionic surfactant, for example as defined above,

wherein the weight percentage of anionic surfactant with respect to the amount of graphene oxide is at most equal to 100%

According to one aspect, the anionic surfactant is present in said aqueous graphene oxide suspension in an amount ranging from 0.001 to 1% by weight, in particular from 0.005 to 0.5%, and more particularly from 0.01 to 0.1 % by weight relative to the weight of suspension medium.

According to a further aspect, the graphene oxide is present in said aqueous graphene oxide suspension in an amount ranging from 0.03 to 0.2%, in particular from 0.04 to 0.15%, and more particularly from 0.05 to 0.1 % by weight relative to the total weight of the graphene oxide suspension.

According to a further aspect, the weight percentage of anionic surfactant with respect to the amount of graphene oxide is ranging from 2 to 100%, in particular from 2 to 80%, and more particularly from 5 to 20%.

The present invention furthermore relates to the aqueous chemically reduced graphene oxide (CRGO) suspension obtainable by the process as described above.

Said particular embodiment is detailed herein after.

Prior to the addition of the anionic surfactant, a dispersion of graphene oxide may be performed. Said step may be performed in the liquid suspension medium, which may be water, in particular with stirring.

It may be dispersed in the liquid suspension medium with a mixing tool, for example selected from magnetic stirring, ultraturrax, ultrasonication bath, ultrasonicator or high pressure homogenizer, and preferably with ultrasonicator.

Energetic or high energetic mixing tools like ultrasonicator or high pressure homogenizer are preferred.

The duration of the dispersion step of the graphene oxide may typically last from 5 minutes to 6 hours, for example from 30 min to 4 hours.

The anionic surfactant may then be added to the GO solution, in particular under stirring.

The reducing agent as defined above, may then also be added to the GO solution.

The reduction/functionalization step as mentioned above may last from 30 min to 24 hours, in particular from 2 to 15 hours.

Said step may necessitate heating, for example at a temperature equal or less than 100°C. Said temperature may in particular range from 80 to 100°C, more particularly from 90 to 100°C, for example at 100°C.

The functionalized CRGO may be filtrated to recover a powder. It may further be washed with any technique known to the man skilled in the art, and for example with water. The obtained powder may then be dried, for example by freeze drying or in vacuum oven. During this step the exceeding portion of anionic surfactant in free form is thus removed.

In expectation of the polymerization step, the functionalized CRGO may then be dispersed again in water, for example using magnetic strirring and/or ultrasonication. In such a suspension, the anionic surfactant in free form may be present in the suspension in an amount equal or less than 0.005%, in particular may range from 0 to 0.001 % by weight, for example from 0 to 0.0001% by weight, with respect to the total weight of the suspension.

The functionalized CRGO suspension obtained at this particular step of the process forms part of the present invention. It may also be characterized by the same feature as the functionalized CRGO directly obtained from the reduction/functionalization step, i.e. the total weight percentage of anionic surfactant, i.e. in bonded and free form, with respect to the amount of graphene material is at most equal to 40% in said purified functionalized CRGO suspension.

"Purified functionalized CRGO suspension" means the functionalized CRGO suspension obtained after the functionalized CRGO has been dispersed again in water.

Said further step is of course also suitable for the all aqueous graphene material suspensions, according to the present invention; i.e. implementing other types of graphene material than CRGO.

PROCESS FOR PRODUCING NANOCOMPOSITES

The present invention encompasses a process for manufacturing a graphene material-polymer nanocomposite, and more specifically a chemically reduced graphene oxide-polymer nanocomposite from an aqueous graphene material suspension, and more specifically an aqueous chemically reduced graphene oxide (CRGO) suspension and monomer(s), said process comprising at least the steps consisting in:

(A) an addition of monomer(s) to a suspension as described above, and
(B) a polymerization of said monomer(s) to yield said nanocomposite.

The monomer(s) may be added in step (A), prior to the polymerization (B), i.e. after the completion of the reduction/functionalization step as described above.

For the purpose of the present invention, the term monomer(s) encompasses the reaction medium comprising

the monomers and optionally any other additional filler, prior to the polymerization step. Other ingredients than fillers may also be added, such as end-chain agent. However, they should not be present in amounts that would negatively impact the improved properties as awaited in the framework of the present invention.

The different steps as mentioned above are described hereinafter. Said steps are successive but this does not exclude that additional steps may be intercalated between said steps, before or after.

In the following description, the aqueous graphene material suspension, and specifically the aqueous functionalized CRGO suspension, may be the suspension as obtained directly after the reduction/functionalization step or a purified suspension as defined above, i.e. a suspension formed by a further dispersion in water of the functionalized graphene material, in particular functionalized CRGO, after removing of exceeding anionic surfactant in free form.

According to a particular embodiment, the following description of the process steps implements a purified suspension, and in particular a functionalized CRGO purified suspension.

(A) Addition of monomer(s) to a suspension according to the invention

The monomer(s) as such are described herein after. They may be incorporated into a suspension as described above. The obtained mixture may be maintained under gentle stirring, for example magnetic stirring.

Said monomer(s) addition may typically last a few minutes, for example at most 30 minutes.

This addition step may also comprise any addition of optional additional fillers or other ingredients useful for the polymerization as already mentioned above in connection to the definition of the monomer material.

(B) Polymerization

Polymerization may be a melt polymerization or a polymerization in a solvent, in particular water, depending on the nature of the monomer(s).

When the polymerization is performed in the melt, the mixture as obtained in the preceding step (A) may be recovered, for example by precipitation and/or filtration. The obtained product may then be dried, for example in a vacuum oven or by freeze drying.

According to this embodiment, the polymerization may in particular be performed, for example in an autoclave reactor, under inert gas, more particularly under stirring and under heating and optionally under pressure.

These parameters and the polymerization duration depend on the polymer targeted, typically from its nature and its molecular weight.

The polymerization conditions are well known to the man skilled in the art.

In particular, the polymerization may be conducted with various steps of temperature. For example, in the case of MXD6 polymerization, the temperature may be maintained within a range of 220 to 250°C during 1 to 2 hours, and be increased to 250 to 260 °C during 2 to 3 hours.

The quantities of the different ingredients depend of the targeted filler concentration in the nanocomposite and the volume of the reactor.

When the polymerization is performed in a solvent, and in particular in water, there is no need to recover dried functionalized graphene material prior to polymerization, said polymerization being directly carried out in the aqueous suspension according to the invention.

The graphene material may be present in the nanocomposite in an amount ranging from 0.01 to 20%, in particular from 0.01 to 10%, and more particularly from 0.5 to 5% by weight, with respect to the total weight of the nanocomposite.

The nanocomposite obtainable by the process according to the invention forms part of the invention.

The nanocomposite according to the present invention may be distinguished from the same polymer taken alone by the transversal resistivity measurement.

Typically, a nanocomposite obtainable by the process according to the present invention may present a transversal resistivity which decreases of at least 5 and 2 decades compared to the conventional extruded composite and *in situ* composite respectively, containing the same graphene material in the same amount but not functionalized.

POLYMER

According to the present invention, the polymer may be selected from semi-aromatic polyamides, aliphatic polyamides, polyesteramides, polyurethanes, polyimides, polyamide-imides, polyarylene-polyethers, polyesters, polyether-imides, polyester-imides, polymeric amic acid derivatives.

All these polymers are known to the man skilled in the art and the corresponding monomers are available as commercial products in a wide variety.

According to a preferred embodiment of the present invention, aromatic polymers are preferred, i.e. polymers

comprising aromatic groups.

According to one aspect of said embodiment, the polymer is a semi-aromatic polyamide.

According to a further embodiment, polymers coming from the polymerization of monomers soluble in water are preferred.

A monomer is considered for the purpose of this invention as "aromatic" when it comprises one or more than one aromatic group. A monomer is considered for the purpose of this invention as "non-aromatic" or "aliphatic" when it does not contain aromatic groups.

In particular, a diacid (or derivative thereof) or a diamine is considered for the purpose of this invention as "aromatic" when it comprises one or more than one aromatic group. A diacid (or derivative thereof) or a diamine or an amino-carboxylic acid (or derivative thereof) is considered for the purpose of this invention as "non-aromatic" or "aliphatic" when it does not contain aromatic groups.

The term diacid derivative is intended to encompass any compound, e.g. acid halogenides, especially chlorides, acid anhydrides, acid salts, acid amides and the like.

Monomers

Examples of monomers are gathered hereinafter, which are largely known from the man skilled in the art and not limiting for the implementation of the present invention:

Non limitative examples of **aromatic** diamines are m-phenylene diamine (MPD), p-phenylene diamine (PPD), 3,4'-diaminodiphenyl ether (3,4'-ODA), 4,4'-diaminodiphenyl ether (4,4'-ODA), m-xylylene diamine (MXDA), as shown below :

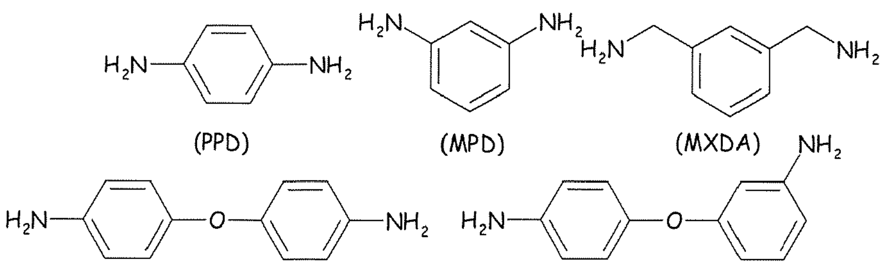

(PPD) (MPD) (MXDA)

(4,4'-ODA) (3,4'-ODA)

and p-xylylenediamine (PXDA, not represented).

The further following aromatic diamines may also be cited: 2,2-bis(p-aminophenyl)propane, 4.4'-diaminodiphenyl-methane, 4.4'-diaminodiphenyl sulfide, 4,4 '-diaminodiphenyl sulfone, 4,4'-diaminodiphenyl ether, 1,5-diamulonaphthalene, 3,3-dimethylbenzidine and 3,3'-dimethoxybenzidine.

Non limitative examples of aliphatic diamine are 1,2-diaminoethane, 1,2-diaminopropane, propylene-1,3-diamine, 1,3-diaminobutane, 1,4-diaminobutane, 1,5-diaminopentane, 1,6-hexanediamine or hexamethylenediamine (HMDA), 1,8-diaminooctane, 1,10-diaminodecane, 1,12-diaminododecane or 1-amino-3-*N*-methyl-*N*-(3-aminopropyl)-aminopropane.

**Cycloaliphatic diamines** may comprise at least one carbocyclic ring having of from 4 to 8 carbon atoms in the ring. Non limitative examples **of Cycloaliphatic diamines** are 1,3-bis(aminomethyl)cyclohexane, bis-(4- aminocyclohexyl)methane or bis(3-methyl-4-aminocyclohexyl)methane are also suitable.

Non limitative examples of **aromatic diacids** are e.g. phthalic acids, including isophthalic acid (IPA), terephthalic acid (TPA) and orthophthalic acid (also referred to simply as phthalic acid or PA hereinafter), naphthalenedicarboxylic acids, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, and bis(3-carboxyphenoxy)benzene.

For the avoidance of doubt, the chemical structures of IPA, TPA, PA are depicted herein below:

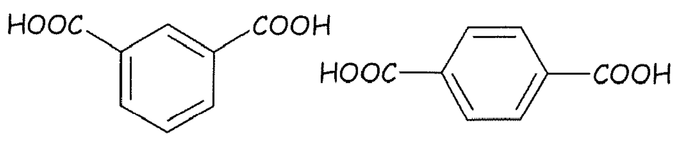

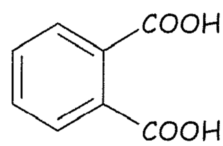

(IPA) (TPA) (PA)

Non limitative examples of **aliphatic diacids** are oxalic acid (HOOC-COOH), malonic acid (HOOC-$CH_2$-COOH), succinic acid [HOOC-$(CH_2)_2$-COOH], glutaric acid [HOOC-$(CH_2)_3$-COOH], 2,2-dimethyl-glutaric acid [HOOC-$C(CH_3)_2$-$(CH_2)_2$-COOH], adipic acid [HOOC-$(CH_2)_4$-COOH], 2,4,4-trimethyl-adipic acid [HOOC-$CH(CH_3)$-$CH_2$-$C(CH_3)_2$-$CH_2$-COOH], pimelic acid [HOOC-$(CH_2)_5$-COOH], suberic acid [HOOC-$(CH_2)_6$-COOH], azelaic acid [HOOC-$(CH_2)_7$-COOH], sebacic acid [HOOC-$(CH_2)_8$-COOH], undecanedioic acid [HOOC-$(CH_2)_9$-COOH], dodecanedioic acid [HOOC-$(CH_2)_{10}$-COOH] and tetradecanedioic acid [HOOC-$(CH_2)_{12}$-COOH].

Among **aromatic diols** the following may be cited:

| | |
|---|---|
| 4,4'-dihydroxydiphenyl oxide | 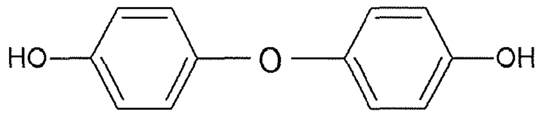 |
| 4,4'-dihydroxydiphenylsulfide | 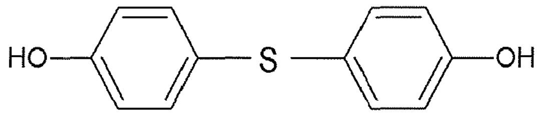 |
| 4,4'-dihydroxydiphenylmethane | 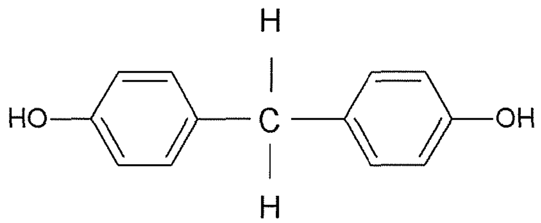 |
| 2,2'-bis(p-hydroxyphenyl)propane (Bisphenol A) | 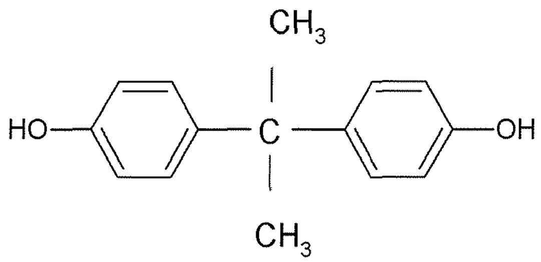 |
| 2,2'-bis(p-hydroxyphenyl)perfluoropropane | 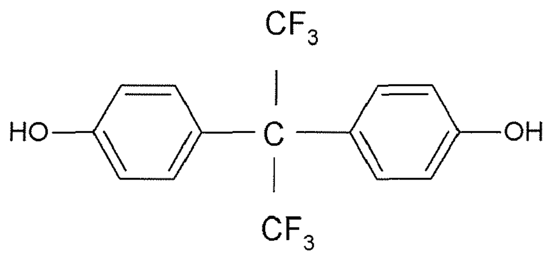 |
| 4,4'-dihydroxybenzophenone | 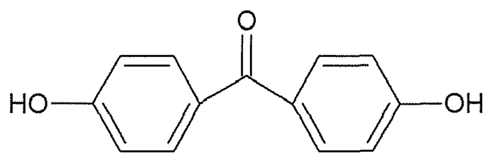 |
| 4,4'-dihydroxydiphenylsulfone | 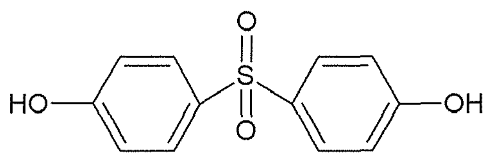 |
| Hydroquinone | 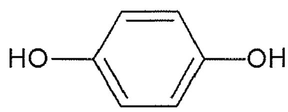 |

(continued)

| | |
|---|---|
| 4,4-dihydroxydiphenyl | 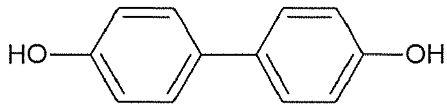 |
| 1,4-bis(4-hydroxyphenyl)benzene | 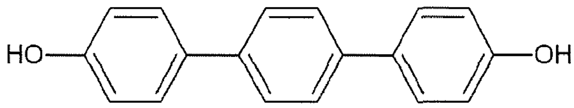 |

The following paragraphs are dedicated to describe the polymer families that may be comprised in the nanocomposite according to the present invention.

## Semi-aromatic polyamides

The polymer may in particular be chosen among semi-aromatic polyamides.

For the purpose of the present description, the term "semi-aromatic polyamide" should be understood as defining any polymer which comprises recurring units obtainable by (and preferably, obtained by) the polycondensation reaction between at least one non-aromatic diacid (or derivatives thereof) and at least one aromatic diamine, and/or recurring units obtainable by (and preferably, obtained by) the polycondensation reaction between at least one aromatic diacid (or derivatives thereof) and at least one non-aromatic diamine.

Very preferably, the semi-aromatic polyamide (SA-PA) comprises recurring units obtainable by (and preferably, obtained by) the polycondensation reaction between an aromatic diamine and an aliphatic diacid (or derivatives thereof) and/or recurring units obtainable by (and preferably, obtained by) the polycondensation reaction between an aromatic diacid (or derivatives thereof) and an aliphatic diamine.

A first class of semi-aromatic polyamides that may be comprised in the nanocomposite according to the present invention are semi-aromatic polyamides (SA-PA1) comprising more than 50 mole % of recurring units obtainable by (and preferably, obtained by) the polycondensation reaction between at least one aliphatic diacid or derivative thereof and at least one aromatic diamine ; preferably more than 75 mole % and more preferably more than 85 mole % of said recurring units can be obtained (and preferably, are obtained) by the polycondensation reaction between at least one aliphatic diacid or derivative thereof and at least one aromatic diamine. Still more preferably, essentially all or even all the recurring units of the semi-aromatic polyamides (SA-PA1) can be obtained (and preferably, are obtained) by the polycondensation reaction between at least one aliphatic diacid or derivative thereof and at least one aromatic diamine.

The expression "at least one aliphatic diacid or derivative thereof' and "at least one aromatic diamine" are understood to mean that one or more than one aliphatic diacid or derivative thereof and one or more than one aromatic diamine can be made to react as above specified. The aromatic diamine is preferably a C6-C24-aromatic diamine, more preferably a C6-C18-aromatic diamine, still more preferably a C6-C10-diamine such as m-xylylene diamine (MXDA). The aromaticity of the aromatic diamine results preferably from the presence therein of m-phenylene and/or o-phenylene groups, in a total amount ranging generally from 1 to 2

Aromatic diamine can be chosen among the one as disclosed above.

A particularly preferred aromatic diamine is m-xylylene diamine (MXDA).

The aliphatic diacid is preferably a C2-C16-aliphatic diacid, more preferably a C4-C12-aliphatic diacid, still more preferably a C6-C10-aliphatic diacid such as adipic acid or sebacic acid. The aliphatic diacid is preferably linear. Cycloaliphatic diacids comprising at least one carbocyclic ring with of from 4 to 8 carbon atoms in the ring, like e.g. cyclohexane dicarboxylic acids may also be used.

Aliphatic diacid can be chosen among the one as disclosed above.

A preferred aliphatic diacid is adipic acid or sebacic acid.

According to a preferred embodiment the aromatic diamine is selected from a $C_6$-$C_{24}$-aromatic diamine, more preferably a $C_6$-$C_{18}$-aromatic diamine and more preferably a $C_6$-$C_{10}$-diamine and the aliphatic diacid is selected form a $C_2$-$C_{16}$ aliphatic diacid.

As above mentioned, such aliphatic diacids can be used in the polycondensation reaction preferably in the form of the free acid or the acid chloride.

For the purpose of the present invention, it should be understood that the definition "semi-aromatic polyamides (SA-PA1)" also encompasses polyamides comprising less than 50 mole %, preferably less than 25 mole % and more preferably less than 15 mole % of recurring units obtainable by (and preferably, obtained by) the polycondensation reaction between at least one aliphatic diacid or derivative thereof, as above specified, and at least one aliphatic diamine. In this particular embodiment, said at least one aliphatic diamine may be a comonomer used in conjunction with one of

the aromatic diamines as specified above. Aliphatic diamine may be chosen among the one as disclosed above. A preferred aliphatic diamine in this regard is 1,6-diaminohexane (hexamethylenediamine (HMDA)).

Cycloaliphatic diamines as described above are also suitable.

Another class of semi-aromatic polyamides (SA-PA) comprised in the nanocomposite according to the present invention are semi-aromatic polyamides (SA-PA2) comprising more than 50 mole % of recurring units obtainable by (and preferably, obtained by) the polycondensation reaction between at least one aromatic diacid, or derivative thereof, and at least one aliphatic diamine.

The expression "at least one aromatic diacid or derivative thereof' and "at least one aliphatic diamine" are understood to mean that one or more than one aromatic diacid or derivative thereof and one or more than one aliphatic diamine can be made to react as above specified.

A preferred aliphatic diamine in this embodiment is hexamethylenediamine (HMDA).

Aromatic diacids and derivative thereof employed in the polycondensation reaction to yield the semi-aromatic polyamides (SA-PA2) may be chosen among the one as disclosed above.

Preferably, the semi-aromatic polyamides (SA-PA2) comprised in the nanocomposite according to the present invention are polyphthalamides, i.e. aromatic polyamides of which more than 50 mole % of the recurring units are obtainable by (and preferably, obtained by) the polycondensation reaction between at least one phthalic acid, chosen preferably among IPA, TPA and PA, or derivative thereof, and at least one aliphatic diamine.

The semi-aromatic polyamides (SA-PA2) may also be chosen from poly(tere/iso)phthalamides.

For the purpose of the present invention, poly(tere/iso)phthalamides are defined as aromatic polyamides of which:

(i) more than 50 mole % of the recurring units are formed by the polycondensation reaction between a mixture of terephthalic acid and isophthalic acid, and at least one aliphatic diamine ;
(ii) more than 25 and up to 50 mole % of the recurring units are formed by the polycondensation reaction between terephthalic acid and at least one aliphatic diamine ; and
(iii) from 1 to 25 mole % of the recurring units are formed by the polycondensation reaction between isophthalic acid and at least one aliphatic diamine.

Poly(tere/iso)phthalamides may further comprise recurring units formed by the polycondensation reaction between at least one aliphatic diacid and at least one aliphatic diamine. In addition, poly(tere/iso)phthalamides are preferably free of recurring units formed by the polycondensation reaction between (ortho)phthalic acid (PA) and at least one diamine (aliphatic or aromatic).

The semi-aromatic polyamide (SA-PA2) may also be chosen from polyterephthalamides or polyisophthalamides.

For the purpose of the present invention, polyterephthalamides respectively polyisophthalamides are defined as aromatic polyamides of which more than 50 mole % of the recurring units are formed by the polycondensation reaction between terephthalic respectively isophthalic acid and at least one aliphatic diamine.

A first class of polyterephthalamides respectively polyisophthalamides consists of respective polyamides essentially all, if not all, the recurring units of which are formed by the polycondensation reaction between terephthalic acid respectively isophthalic acid and at least one aliphatic diamine [class (I)].

A second class of polyterephthalamides respectively polyisophthalamides consists of respective polyamides essentially all, if not all, the recurring units of which are formed by the polycondensation reaction between mixtures of terephthalic acid and isophthalic acid and at least one aliphatic diamine [class (II)]. The molar ratio of terephthalic acid to isophthalic acid is not subject to particular restrictions and may be generally in the range of from 85:15 to 15:85, preferably in the range of from 70:30 to 30:70.

A third class of polyterephthalamides respectively polyisophthalamides consists of respective polyamides essentially all, if not all, the recurring units of which are formed by the polycondensation reaction between mixtures of terephthalic acid respectively isophthalic acid and at least one aliphatic diacid, and at least one aliphatic diamine [class (III)]. Such recurring units are respectively referred to as terephthalamide respectively isophthalamide and aliphatic acid-amide recurring units. Within class (III), a subclass consists of polyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is 60 mole % or more; in addition, it is advantageously 80 mole % or less, and preferably 70 mole % or less [subclass (III-1)].

Within class (III), a second subclass consists of polyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is less than 60 mole % [subclass (III-2)]. A fourth class of polyterephthalamides respectively polyisophthalamides

consists of respective polyamides essentially all, if not all, the recurring units of which are formed by the polycondensation reaction between terephthalic acid, isophthalic acid, at least one aliphatic diacid and at least one aliphatic diamine [class (IV)].

Aliphatic acids and aliphatic amines useful for classes (I) to (IV) are those above described as suitable for polymers SA-PA1 and SA-PA2.

Among all semi-aromatic polyamides (SA-PA) described here above, semi-aromatic polyamides (SA-PA1) are often preferred as components of the nanocomposite in accordance with the instant invention. MXD6 and MXD10 polymers are especially preferred as the semi-aromatic polyamide (SA-PA).

For the purpose of the present invention, a MXD6 polymer is intended to denote a semi-aromatic polyamide essentially all, if not all, the recurring units of which are obtainable by (and preferably, obtained by) the polycondensation reaction of adipic acid with meta-xylylene diamine.

For the purpose of the present invention, a MXD10 polymer is intended to denote a semi-aromatic polyamide essentially all, if not all, the recurring units of which are obtainable by (and preferably, obtained by) the polycondensation reaction of sebacic acid with meta-xylylene diamine.

**Aliphatic** polyamides

The polymer may in particular be chosen among aliphatic polyamides.

For the purpose of the present description, the term "aliphatic polyamide" should be understood as defining any polymer which comprises recurring units obtainable by (and preferably, obtained by) the polycondensation reaction between at least one aliphatic diacid (or derivatives thereof) and at least one aliphatic diamine.

More specifically for the purpose of the present invention, the definition "aliphatic polyamide" is intended to denote any polyamide more than 50 mole %, preferably more than 75 mole % and more preferably more than 85 mole % of the recurring units of which are obtainable by (and preferably, obtained by) the polycondensation reaction between at least one aliphatic diacid (and/or a derivative thereof) and at least one aliphatic diamine, and/or by the auto-polycondensation reaction of an amino carboxylic acid and/or a lactam.

Said monomers may advantageously be chosen among the hereabove described monomers.

More preferably, the aliphatic polyamide (PA) is chosen from poly(hexamethylene adipamide) (nylon 66), poly(hexamethylene azelaamide) (nylon 69), poly(hexamethylene sebacamide) (nylon 610), poly(hexamethylene dodecanoamide) (nylon 612), poly(dodecamethylene dodecanoamide) (nylon 1212), poly(11-amino-undecano-amide) (nylon 11) and their copolymers or mixtures thereof Examples of polyamides obtainable by (and preferably, obtained by) the auto-polycondensation reaction of an amino carboxylic acid and/or a lactam are the polycaprolactam (nylon 6), and the poly(11-amino-undecano-amide). Cycloaliphatic polyamides obtainable from cyclic monomers as mentioned hereinbefore as suitable monomers for the semi-aromatic polyamides may also be mentioned.

More preferably, the aliphatic polyamide (PA) is chosen from nylon 6 and nylon 66.

Still more preferably, the aliphatic polyamide (PA) is nylon 66, i.e. the polyamide obtainable by (and preferably, obtained by) the polycondensation reaction between 1,6-hexamethylenediamine and adipic acid.

**Polyesteramides**

The polymer may in particular be chosen among polyesteramides.

For the purpose of the present description, the term "polyesteramides" should be understood as defining any polymer which comprises both ester and amide groups.

Aromatic and aliphatic diamines as described above may be useful for the preparation of polyersteramides.

**Polyurethanes**

The polymer may in particular be chosen among polyurethanes.

Aromatic diols as described above may be useful for the preparation of polyurethanes, by reaction with a diisocyanate derivative.

**Polyimides**

The polymer may in particular be chosen among polyimides.

For the purpose of the present description, the term "polyimides" should be understood as defining any polymer which comprises imide groups. It may be a linear polyimide or aromatic heterocyclic polyimide.

Aromatic diamines as described above may be useful for the preparation of polyimides.

**Polyamide-imides**

The polymer may in particular be chosen among polyamide-imides.
Aromatic diamines as described above may be useful for the preparation of polyamide-imides.

**Polyarylene-polyethers**

The polymer may in particular be chosen among polyarylene-polyethers.
As a first embodiment of said polyarylene polyethers, poly(arylether sulfones) may be cited. For the purpose of the present invention, poly(arylether sulfones) should be understood to cover polymers wherein at least 5% o the recurring unites (RU) are derived from one or more formulae comprising at least one arylene group, at least one ether group (-O-) and at least one suflone group ($-SO_2-$). They may be in particular obtained by polycondensation of at least one dihalodiphenyl sulfone with at least one diol, in particular as described above. The dihalodiphenylsulfone may be 4,4'-dihalodiarylsulfone.

**Polyether-imides**

The polymer may in particular be chosen among polyether-imides
Aromatic diamines as described above may be useful for the preparation of polyether-imides.

**Polyesters**

The polymer may in particular be chosen among polyesters.
For the purpose of the present description, the term "polyester" should be understood as defining any polymer which comprises ester functional groups in the main chain.
Aromatic diols and carboxylic diacids as described above may be useful for their preparation.

**Polyester-imides**

The polymer may in particular be chosen among polyester-imides.
Aromatic diamines as described above may be useful for the preparation of polyester-imides.

**Polymeric amic acid derivatives**

The polymer may in particular be chosen among polymeric amic acid derivatives.
Aromatic diamines as described above may be useful for the preparation of amid-polyacids.
The molecular weight of the polymer comprised in the nanocomposite according to the present invention is not particularly limited.

**MASTERBATCH / OPTIONAL DILUTION STAGE**

According to a particular embodiment, the present invention further relates to a process for producing a Masterbatch.
Therefore, the present invention also concerns a process for manufacturing a graphene material-polymer Masterbatch, and more specifically a chemically reduced graphene oxide-polymer Masterbatch from an aqueous material graphene suspension, and more specifically an aqueous chemically reduced graphene oxide (CRGO) suspension and monomer(s), said process comprising at least the steps consisting in:

(A) an addition of monomer(s) to a graphene material suspension according to the present invention, and
(B) a polymerization of said monomer(s) to yield said Masterbatch.

As used herein the term "Masterbatch" means a nanocomposite filled with a high or even very high amount of particles. This concentrated or even highly concentrated nanocomposite may be easily incorporated/diluted into a compatible polymer matrix by any means known to the man skilled in the art.
Masterbatch obtainable by the process according to the present invention form part of the present invention.
Highly concentrated Masterbatch (MB) are produced according to the *in situ* polymerization as described above. The graphene material concentration of said Masterbatch may more particularly be present in a minimum 3wt%, preferably ranges from 3 to 5wt%, or more preferably from 5 to 10wt%, and for example from 10 to 20wt%, relative to the total

weight of the Masterbatch.

According to another embodiment, the obtained nanocomposite Masterbatch is further diluted with a polymer matrix. This strategy presents the advantage that the final user may prepare all nanocomposite with respect to the filler amount by implementing a dilution stage. Said dilution stage may for example be performed *via* extrusion. Adding this dilution stage is moreover less time consuming than performing several *in situ* polymerization steps for the different targeted concentrations.

Said two stages protocol, or process comprising an additional dilution stage, can enhance even better the dispersion, and consequently the properties of the nanocomposite.

It may also allow combining the properties of different polymers when they are of different nature between the nanocomposite and the polymer matrix.

The Masterbatch may be diluted with pure polymer matrix, for example which comprises the same polymer as the one of the nanocomposite, a different one or a mixture of the same as the one of the nanocomposite and a different one.

For example, when the Masterbatch as obtained according to the present invention is formed with a semi-aromatic polyamide, the polymer matrix may be made of the same semi-aromatic polyamide (SAP) or of a different nature polyamide, which may be an aliphatic polyamide (PA) or a mixture of semi-aromatic polyamide and polyamide (SAP+PA), for example to reach a lower CRGO loading in the final sample. This dilution may occur in the melt using industrial equipment like an extruder or an internal mixer.

According to a preferred embodiment, an extruder is used.

The mixing parameters are fixed according to the general knowledge of the man skilled in the art.

It is also possible to add another filler during the dilution stage, said additional filler, like plasticizer and compatibilizer.

When the MB is a CRGO-semi aromatic polyamide nanocomposite, it may be diluted into all the types of semi-aromatic polyamides as described above, such as SA-PA1 and SA-PA2.

Particularly beneficial results are obtained when diluting MB based on semi-aromatic polyamide (SA-PA1) as obtained according to the invention with MXD6 polymers (as hereabove defined) or MXD10 polymers (as hereinabove defined).

MXD6 polymers and other semi-aromatic polyamides are commercially available notably from Mitsubishi Gas Chemicals. Polymer materials comprising MXD6 and a second polyamide (e.g. of the type as hereinafter referred to as PA3) are notably commercially available as IXEF® polyamides from Solvay Advanced Polymers, L.L.C.

MXD10 polymers are a second group of preferred semi-aromatic polyamides in the nanocomposite in accordance with the instant invention.

Suitable polyphthalamides are available as AMODEL® polyphthalamides from Solvay Advanced Polymers, L.L.C.

Still when the MB is a CRGO-semi aromatic polyamide nanocomposite, it may be diluted into aliphatic polyamide (PA) such as described above.

Whatever the nature of the polymer forming the MB according to the present invention, it may be diluted to other polymer matrices such as polyurethanes, polyesters, polyamides-imides, polyolefins.

The nanocomposite according to the present invention may be obtained by dilution of a Masterbatch into a polymer matrix comprising polyolefins. As an example a polymer matrix may be cited, comprising a semi-aromatic polyamide, for example amounting from 70 to 90, for example 80% by weight with respect to the total weight of the final polymer matrix, and further comprising polyolefins, for example amounting from 10 to 30% by weight, for example 20% by weight, with respect to the total weight of the final polymer matrix.

"Final polymer matrix" means the polymer matrix enriched with the filler *via* the dilution of the Masterbatch. Polyolefins may be advantageously present in the polymeric matrix for improving the impact resistance of the nanocomposite while the graphene material is present for improving the barrier properties. A typical application for this kind of nanocomposite is fuel tank application.

**LATEX POLYMER**

According to a particular embodiment of the present invention, it further relates to a process for producing a composition comprising a graphene material, and more specifically a chemically reduced graphene oxide, and at least one polymer, the process comprising the steps of:

(i) mixing an aqueous polymer latex to a graphene material suspension according to the present invention, and
(ii) co-coagulation of the obtained mixture or coating of the obtained mixture on a substrate.

The polymer latex may be chosen among fluoropolymer latex such as Polyvinylidene fluoride (PVDF), Perfluoroalkoxy alkanes (PFA/MFA), Fluoro/Perfluoroelastomers, copolymer of ethylene and chlorotrifluoroethylene (ECTFE) or Polyvinylidene chloride (PVDC) latex.

The applicant has found that when using this process, graphene material is well dispersed in the latex polymer.

Step (i) may be carried out by adding an aqueous polymer latex to the suspension according to the invention, for example under stirring, sonication or other known means. Preferably, the aqueous polymer is dropwise added to the suspension under stirring. Alternatively, the suspension may be added to the aqueous polymer latex, for example under stirring. The result is an hybrid suspension.

Step (ii) may be carried out by the addition of an electrolyte, typically nitric acid, in order to trigger the coagulation of the latex leading to the entrapment of the filler in the polymer particles. After washing and drying a nanocomposite is recovered.

APPLICATIONS

The aqueous graphene material suspension according to the present invention may be used for producing conductive films, in particular by coating a substrate with said suspension, optionally followed by a thermal reduction.

The nanocomposites according to the present invention may be used for preparing fuel barrier material, in particular in the automotive field. They may in particular be useful for the manufacture of fuel tanks and pipes.

They may also be used for preparing thermally conductive, antistatic and barrier polymer materials for solid parts or polymer coatings on substrates.

The invention extends to the use of compositions (i) as obtained above by co-coagulation of the graphene material and the polymer latex particles present in an hybrid suspension, i.e. obtained by mixing the aqueous graphene material suspension and a polymer latex, or (ii) by coating the hybrid suspension on a substrate, for the production of thermally conductive, antistatic and barrier polymer materials for solid parts or coatings.

In other words, in case (ii) a coating may be directly formed from the hybrid suspension on a substrate.

Another possible use is for battery electrodes, eventually with additional filler like typical battery active material well known by the man skilled in the art, for example lithium cobalt oxide in the case of lithium battery.

The expressions "between ... and ..." and "ranging from ... to ..." should be understood as meaning limits included, unless otherwise specified.

The examples that follow illustrate the present invention without limiting the scope thereof

"wt%" means % by weight.

**EXAMPLE:**

1. Graphene material

| Nature of the graphene material | SSA (BET) in $m^2/g$ | Oxygen content in wt% |
|---|---|---|
| Expanded graphite sold under the name TIMREX BNB90 by company TIMCAL | 24* | <0.2 |
| Graphene oxide (GO) | 23** | 36 |
| Chemically reduced graphene oxide (CRGO) | | 2 |
| Functionalized chemically reduced graphene oxide CRGO/Pyr-$SO_3$ | | 2 |
| * measured by protocol A as described above<br>** measured by protocol B as described above | | |

2. Polymer (and monomers)

**[0258]** - MXD6: Para0000 (monomers: adipic acid and meta-xylylene diamine)

3. Nanocomposite production

3.1. Preparation of the graphene oxide

The graphene oxide used in the next stages is produced following a modified Hummers method described as

follow: 5mg of expanded graphite (TIMREX BNB90) is added slowly to 350ml of $H_2SO_4$ precooled at 0°C. Then 50 mg $KMNO_4$ and 7.5 mg $NaNO_3$ were added gradually with stirring. The temperature of the mixture was always kept below 10°C. The mixture was stirred during 30 min. Subsequently, 660 ml demi-water is slowly added by dropping funnel; consequently, the temperature increased to reach approximately 100°C. The mixture is stirred for 30 min. The reaction is terminated by adding 1000 ml demi-water followed by 66.6 ml of $H_2O_2$ (30%). The yellow brown color of the mixture indicates that the oxidation of graphite occurred correctly. Next, the mixture is diluted with $H_2O$ and rested overnight so that the mother liquor decants. After removing the liquid phase, the GO is washed two times with 10% HCl (2x11). After, the GO is washed by a succession of agitation in demi-water and centrifugation (10000rpm, 30min) steps until pH-7 of the washing water after centrifugation is reached. Finally, the particles are recovered after freeze-drying.

3.2. Production of a Masterbatch with CRGO/ Pyr-1 $SO_3$

This stage is separated in 2 phases which consist respectively in the production of the functionalized graphene and the polymerization in presence of that functionalized graphene.

This stage/first phase can be divided in four steps:

- STEP 1: 1g of graphite oxide (GO), obtained previously by oxidizing of the TIMREX graphite via the Hummers method as described in point 3.1., is dispersed in 11 of water using magnetic stirring (2h) and ultrasonication bath (2h, at room temperature - Branson 2210). The GO is thus present in the suspension in an amount equal to 0.1 wt% with respect to the suspension weight.
- STEP 2: the pyrenesulfonic acid sodium salt (Pyr-1$SO_3$) in a ratio from 15 to 100wt% is added to the GO suspension, with respect to the GO weight, and stirred for 15min before the addition ofhydrazine (10ml). Then, the solution is heated at 100°C for 24h, still under stirring.
- STEP 3: the mixture is filtered on a folded paper filter (Whatman 114V) and the product recovered on the filter is then freeze dried after washing with water.
- STEP 4: the CRGO/ Pyr-1 $SO_3$ is then dispersed in water (3.5mg/ml) using magnetic stirring (2h) and ultrasonication bath (2h, at room temperature - Branson 2210) to obtain a purified suspension, as previously described. Considering that this purified suspension is exempted of free surfactant and ofhydrazine, due to the washing step (STEP 3), the weight percentage of surfactant, which is bonded surfactant, with respect to the amount of graphene material (CRGO) is equal to 5wt% and 12wt%, issued from the suspensions prepared in STEP 2 by the addition of a ratio of 15 to 100wt% Pyr-1 $SO_3$ with respect to the GO weight respectively.

Moreover, the anionic surfactant in this purified suspension is present in an amount equal to 0.017wt% and 0.037wt% with respect to the total suspension weight.

This STAGE 1/second phase can be divided in three steps:

- STEP 5: the adipic acid (16.1g) and meta-xylylene diamine (14.5ml) monomers (purchased from Aldrich with CAS numbers respectively 124-04-9 and 1477-55-0) are added in the form of Nylon salt. This stoichiometric ratio between the two monomers (adipic acid and meta-xylylene diamine) is needed in the polycondensation process to reach high molecular weight. After the monomers incorporation, the mixture is maintained under magnetic stirring during 30min.

The nylon salt is dissolved in the CRGO/ Pyr-1 $SO_3$ suspension in order to have a good dispersion of the filler in the nylon salt before the polymerization.

- STEP 6: the mixture is precipitated in 8 volumes of cold acetone to recover the CRGO/ Pyr-1 $SO_3$/Nylon salt mixture with a perfect stoichiometric ratio between the two monomers. Afterwards, the product is filtered on a Buchner paper filter (Whatman 1440 110) and dried overnight under reduced pressure at 80°C.
- STEP 7: the polycondensation of the Nylon salt occurs in an 50 ml autoclave reactor (classic closure type), under nitrogen flow (0.5bar) and mechanical stirring (200rpm) with different steps of temperature. The polymerization starts at 240°C during 2h before increasing the temperature at 250°C for 1h. Then the pressure is decreased to -1bar during 30min to maximize the monomer conversion into polymer. Finally, the melt polymer containing 3wt% of CRGO/ Pyr-1$SO_3$ is recovered using a spatula. This amount is expressed in weight ratio with respect to the polymer weight.

3.3. Dilution of the Masterbatch

Said stage consists of diluting the Masterbatch obtained above at point 3.1. with pure commercial MXD6

(PAra0000 from Solvay) polymer matrix to reach 2wt% of CRGO/ Pyr-1 $SO_3$ in the final sample. This filler content is obtained by mixing 7.5g of MB with 7.5g of MXD6 in a lab scale twin-screw extruder (XPlore MC15 from DSM) operated in recycle mode with the following conditions: under nitrogen flow, at 260°C and screws rotation speed of 250rpm and a residence time of 5min.

4. Specimens preparation and characterization

4.1. Functionalization level

In this paragraph the graphene non-covalent functionalization with the Pyr-1 $SO_3$ is highlighted.

4.1.1 Thermal Gravimetric Analysis (TGA)

Thermal Gravimetric Analysis (TGA) are performed to determine the organic content of the CRGO/ Pyr-1 $SO_3$ powder corresponding to the pyrenesulfonic acid quantity bonded to the CRGO, recovered after washing/STEP3. The measurements are performed with a TA Q500 equipment in the following conditions: heating functionalized graphene powder from -20°C/min to 800°C at 10°C/min under $N_2$ flow.

Figure 1 is used to evaluate the functionalization level; in other words the weight percentage of the Pyr-$1SO_3$ compared to the functionalized CRGO (CRGO/Pyr-$1SO_3$). This figure represents in particular the weight percentage of Pyr-$1SO_3$, CRGO alone and CRGO/ Pyr-1 $SO_3$ *vs* the temperature. At 550°C, the degradation of the Pyr-$1SO_3$ occurs and the weight of Pyr-1 $SO_3$ is considered as zero; at such a temperature, the CRGO alone is also slightly degraded, i.e. its residual weight percentage is 86.26%. The weight percentage of functionalized CRGO at 550°C is equal to 81.05%, and allows to evaluate the functionalization level by using the relation:

$$(86.26\%-0.8105\%) \text{ x } W_{CRGO} = W_{Pyr-1SO3} \text{ where W is the weight}$$

This functionalization level was evaluated as around 5wt%.

4.1.2 Solvent dispersion tests

The solvent dispersion test in water gives some information about the Pyr-1 $SO_3$ non-covalent functionalization on the CRGO during the reduction/functionalization process: A picture (not annexed) was taken to compare three water dispersions, CRGO, CRGO mixed with Pyr-1 $SO_3$ and CRGO functionalized with Pyr-$1SO_3$, prepared by magnetic stirring 5 mg of graphene (CRGO) during 2h in 5 ml water, followed by 2h of sonication bath and stirring again overnight.

This picture shows clearly that the functionalized CRGO is the most stable in water, compared to the two others.

4.2. Transversal resistivity measurement

CRGO/ Pyr-$1SO_3$ was used in the *in situ* synthesis of MXD6 based composites. These composites were characterized as follow.

The transversal resistivity measurement is performed on compression-molded disks using a Carver hot press. The samples are first melted during 5min30s and pressed at 10bars during 3min. The mould is then directly cooled down to room 20°C at 10 bars using another Carver press cooled by water flow. The specimens are 10 cm in diameter and 750μm thick. The resistivity is measured in order to evaluate the graphene material dispersion within the polymeric matrix. Indeed, at the same loading, if the filler dispersion quality increases, the electrical conductivity is also improved. A two probes test in an isolate box was used in order to measure some low conductive materials. The apparatus used is a two-probe test method, where an electrometer Keithley (Model 8009 test fixture) is able to measure volume resistivity of insulating materials up to $10^{18}$ Ohm cm.

The Figure 2 compares the resistivity of three composites containing 2wt% of filler: expanded graphite (TIMREX) *via* conventional extrusion, CRGO *via in situ* polymerization and CRGO/ Pyr-$1SO_3$ *via in situ* polymerization, according to the procedure described above. These results demonstrate clearly the advantage of the present procedure over the two other samples: The transverse resistivity of the *in situ* composite containing the CRGO/ Pyr-$1SO_3$ is 3 $10^8$ Ohm.cm, which represents a decrease of 7 and 2 decades compared to the conventional extruded composite with expanded graphite and *in situ* CRGO composite respectively.

4.3. Morphology analysis by microscopy

Transmission Electron Microscopy experiments were carried out (using a JEOL 2100 apparatus operating at 200 kV) in order to see composite morphology, i.e. the graphene dispersion quality in the polymer composite.

The figure 3 shows a really good CRGO/ Pyr-1 $SO_3$ dispersion (2wt%) within the MXD6 polymer matrix after an *in situ* polymerization followed by the dilution by extrusion as illustrated above. The graphene sheets are dispersed very uniformly and the aggregates are really thin (generally below 15nm, which corresponds to 5-6 individual layers).

## Claims

1. Aqueous graphene material suspension comprising:

   - a liquid suspension medium comprising more than 50% by weight of water with respect to the total amount of liquid suspension medium,
   - at least one graphene material, and
   - at least one anionic surfactant with a part thereof being present as functionalizing said graphene material,

   wherein the weight percentage of anionic surfactant with respect to the amount of graphene material is at most equal to 100%.

2. Suspension according to claim 1, wherein the weight percentage of anionic surfactant with respect to the amount of graphene material is ranging from 2 to 100%, in particular from 5 to 80%, and more particular from 5 to 60%.

3. Suspension according to claim 1 or 2, wherein the anionic surfactant comprises (i) at least one hydrophobic moiety containing at least one, two or three fused benzene rings, (ii) at least one anionic hydrophilic moiety chosen among sulfates ($-O-SO_3^-$), sulfonates ($-SO_3^-$), carboxylates [$-C(=O)O^-$] and mixtures thereof, and (iii) a monovalent cation, and is in particular chosen among 1-pyrenesulfonic acid sodium salt (Pyr-1$SO_3$), 1,3,6,8-pyrenetetrasulfonic acid tetrasodium salt (Pyr-4$SO_3$), and diasodium salt of 3,4,9,10-perylenetetracarboxylic diimide bisbenzenesulfonic acid (PDI).

4. Suspension according to anyone of the preceding claims, wherein the anionic surfactant is present in the suspension in an amount at most equal to 1% by weight, in particular ranges from 0.001 to 1%, more particularly ranges from 0.005 to 0.5%, and even more particularly from 0.01 to 0.1 % with respect to the suspension weight.

5. Suspension according to anyone of the preceding claims, wherein the graphene material is selected from graphene, nano-graphene platelets (NGP), graphene oxide (GO), reduced graphene oxide (RGO) *via* thermal reduction (TRGO) or chemical reduction (CRGO) and expanded graphite, and is preferably chemically reduced graphene oxide (CRGO), and said graphene material is in particular present in the suspension in an amount ranging from 0.01 to 0.5% by weight, in particular ranging from 0.015 to 0.45%, more particularly from 0.02 to 0.4% with respect to the suspension weight.

6. Process for manufacturing an aqueous chemically reduced graphene oxide suspension (CRGO), said process comprising:

   - forming an aqueous graphene oxide (GO) suspension comprising (i) graphene oxide, (ii) a liquid suspension medium comprising more than 50% by weight of water with respect to the total amount of liquid suspension medium, and (iii) at least one anionic surfactant, wherein the weight ratio between the anionic surfactant and the graphene oxide is less than 1, in particular ranges from 0.02 to 0.8, more particularly ranges from 0.05 to 0.2 then
   - adding at least one reducing agent to the aqueous graphene oxide suspension, then
   - optionally, heating at a temperature below or equal to 100°C.

7. Process according to the preceding claim, wherein the graphene oxide is present in said liquid suspension medium in an amount ranging from 0.03 to 0.2% by weight, in particular from 0.04 to 0.15% by weight, more particularly from 0.05 to 0.1% by weight relative to the total weight of said suspension medium and wherein the anionic surfactant is present in said liquid suspension medium in an amount ranging from 0.001 to 1% by weight, in particular from 0.005 to 0.5% by weight, more particularly from 0.01 to 0.1% by weight relative to the total weight of said suspension medium.

**8.** Process according to claim 6 or 7, wherein the reducing agent is chosen among hydrazine, Vitamin C, $NaBH_4$, sodium sulfite, sodium thiosulfite, sodium formaldehyde sulfoxylate, ascorbic acid, hydriodic acid in combination with trifluoro acetic acid and thiourea dioxide.

**9.** Process for manufacturing a graphene material-polymer nanocomposite, and more specifically a chemically reduced graphene oxide-polymer nanocomposite from an aqueous material graphene suspension, and more specifically an aqueous chemically reduced graphene oxide (CRGO) suspension and monomer(s), said process comprising at least the steps consisting in:

(A) an addition of monomer(s) to a suspension according to anyone of claims 1 to 5 or a suspension as obtained by the process according to anyone of claims 6 to 8, and
(B) a polymerization of said monomer(s) to yield said nanocomposite.

**10.** Process according to the preceding claim, wherein the polymerization (B) is a melt polymerization or a polymerization in a solvent, in particular in water, and wherein the monomer(s) is/are suitable for preparing a polymer selected from semi-aromatic polyamides, aliphatic polyamides, polyesteramides, polyurethanes, polyimides, polyamide-imides, polyarylene-polyethers, polyesters, polyether-imides polyester-imides, polymeric amic acid derivatives.

**11.** Process according to claims 9 or 10, wherein the polymer is a semi-aromatic polyamide and in particular, wherein the polymerization is a polycondensation reaction between at least one aromatic diamine and at least one aliphatic diacid or derivatives thereof or polycondensation reaction between at least one aromatic diacid or derivatives thereof and at least one aliphatic diamine, and more particularly wherein the aromatic diamine is m-xylylene diamine and the aliphatic diacid is adipic acid.

**12.** Process according to anyone of claims 9 to 11, wherein the obtained nanocomposite is further diluted with a polymer matrix, in particular using extrusion, said polymer matrix comprising the same polymer as the one of the nanocomposite, a different one or a mixture of the same as the one of the nanocomposite and a different one, the polymer matrix being in particular selected from semi-aromatic polyamides, a mixture of semi-aromatic polyamides and aliphatic polyamide or a mixture of semi-aromatic polyamides and polyolefins.

**13.** Nanocomposite obtainable by the process according to anyone of claims 9 to 12 (in particular, nanocomposite obtainable by the process according to anyone of claims 9 to 12, wherein the graphene material is present in the nanocomposite in an amount of less than 3% by weight, in particular of less than 2.5% by weight and more particularly equal or less than 2% by weight, with respect to the total weight of the nanocomposite), wherein the nanocomposite has a transversal resistivity which decreases of at least 5 decades and at least 2 decades compared to the conventional extruded composite and *in situ* composite respectively, containing the same graphene material in the same amount but not functionalized.

**14.** Masterbatch obtainable by the process according to anyone of claims 9 to 11, wherein the graphene material is present in the Masterbatch in an amount above 3% by weight, in particular ranging from 3 to 5% by weight, in particular from 5 to 10% by weight, for example from 10 to 20% by weight, with respect to the total weight of the masterbatch.

**15.** Use of a suspension according to anyone of claims 1 to 5 or a suspension as obtained by the process according to anyone of claim 6 to 8 for producing conductive films, in particular by coating a substrate with said suspension, optionally followed by a thermal reduction.

**16.** Use of a nanocomposite according to claim 13 for preparing fuel barrier material, for example in the automotive field and for preparing thermally conductive, antistatic and barrier polymer materials for solid parts or polymer coatings on substrates.

**17.** Process for producing a composition comprising a chemically reduced graphene oxide and at least one polymer, the process comprising the steps of:

(i) mixing an aqueous polymer latex to a suspension according to anyone of claims 1 to 5 or a suspension as obtained by the process according to anyone of claim 6 to 8,
(ii) co-coagulation of the obtained mixture or coating of the obtained mixture on a substrate.

**18.** Process according to the preceding claim, wherein the polymer latex is chosen among fluoropolymer latex such as Polyvinylidene fluoride (PVDF), Perfluoroalkoxy alkanes (PFA/MFA), Fluoro/Perfluoroelastomers, copolymer of ethylene and chlorotrifluoroethylene (ECTFE) or Polyvinylidene chloride (PVDC) latex.

**19.** Use of a composition as obtained in the preceding claim for the production of thermally conductive, antistatic and barrier polymer materials for solid parts or coatings and for the production of battery electrodes.

**Figure 1**

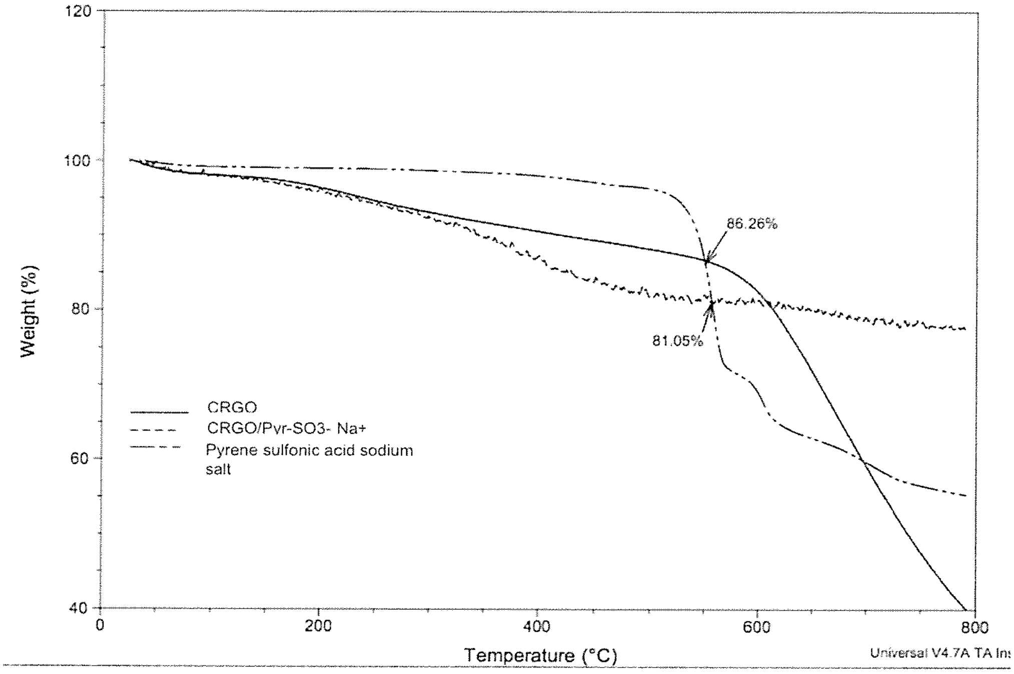
120
100
80
60
40
Weight (%)
0
200
400
600
800
Temperature (°C)
86.26%
81.05%
CRGO
CRGO/Pyr-SO3- Na+
Pyrene sulfonic acid sodium salt
Universal V4.7A TA In

## Figure 2

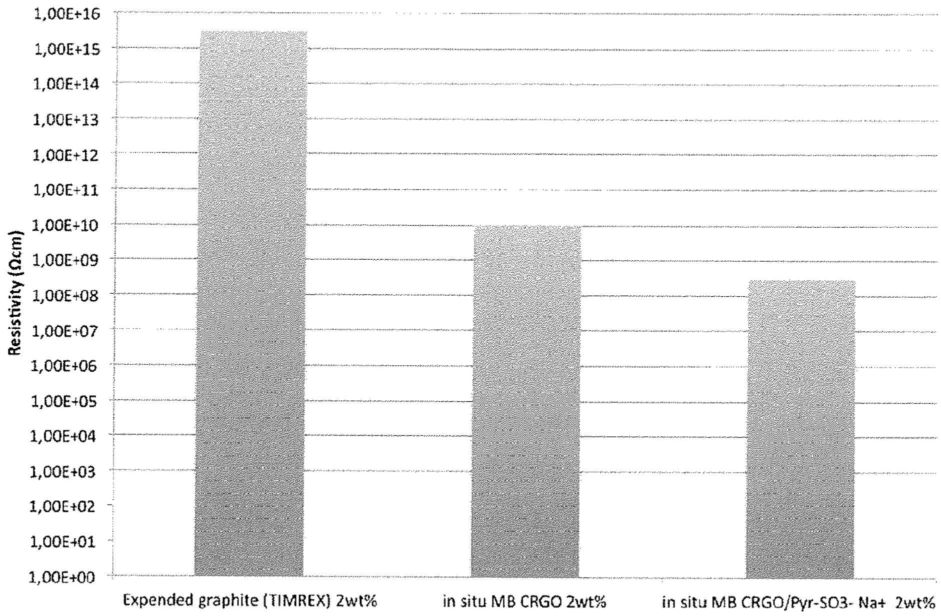
1,00E+16
1,00E+15
1,00E+14
1,00E+13
1,00E+12
1,00E+11
1,00E+10
1,00E+09
1,00E+08
1,00E+07
1,00E+06
1,00E+05
1,00E+04
1,00E+03
1,00E+02
1,00E+01
1,00E+00
Resistivity (Ωcm)
Expended graphite (TIMREX) 2wt%
in situ MB CRGO 2wt%
in situ MB CRGO/Pyr-SO3- Na+ 2wt%

Figure 3

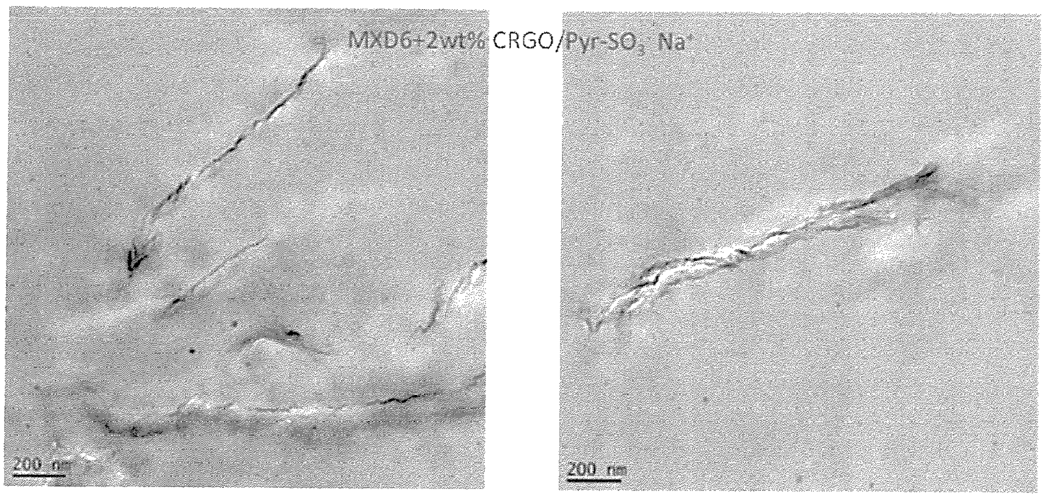

Europäisches Patentamt
European Patent Office
Office européen des brevets

# EUROPEAN SEARCH REPORT

Application Number
EP 14 17 3536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | H. YANG ET AL: "A simple method for graphene production based on exfoliation of graphite in water using 1-pyrenesulfonic acid sodium salt", CARBON, vol. 53, 1 March 2013 (2013-03-01), pages 357-365, XP055157876, ISSN: 0008-6223, DOI: 10.1016/j.carbon.2012.11.022 * "Experimental", "Results and discussion" * | 1-5 | INV. C01B31/04 |
| X | EP 2 631 260 A1 (SOLVAY [BE]) 28 August 2013 (2013-08-28) | 13,16 | |
| A | * paragraphs [0012] - [0042]; examples 1-3 * | 1-12 | |
| X | CHANG IL KIM ET AL: "Graphenes for low percolation threshold in electroconductive nylon 6 composites", POLYMER INTERNATIONAL, vol. 63, no. 6, 12 June 2014 (2014-06-12), pages 1003-1010, XP55150045, ISSN: 0959-8103, DOI: 10.1002/pi.4601 | 13 | |
| A | * "Experimental", "Results and discussion" * | 9-12, 14-19 | |
| A | US 2013/197256 A1 (WU YI-SHUEN [TW] ET AL) 1 August 2013 (2013-08-01) * paragraphs [0013] - [0034]; examples 1-6 * | 1-9 | |
| A | EP 2 716 719 A1 (ECKART GMBH [DE]; BYK CHEMIE GMBH [DE]) 9 April 2014 (2014-04-09) * paragraphs [0138] - [0217] * | 1-5 | |

-/--

TECHNICAL FIELDS SEARCHED (IPC)

C01B

The present search report has been drawn up for all claims

1

| Place of search | Date of completion of the search | Examiner |
|---|---|---|
| The Hague | 11 December 2014 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 17 3536

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | KIYOUNG JO ET AL: "Stable Aqueous Dispersion of Reduced Graphene Nanosheets via Non-Covalent Functionalization with Conducting Polymers and Application in Transparent Electrodes", LANGMUIR, vol. 27, no. 5, 1 March 2011 (2011-03-01), pages 2014-2018, XP55059005, ISSN: 0743-7463, DOI: 10.1021/la104420p * "Experimental", "Results and discussion" * ----- | 1-9 | |
| | | | TECHNICAL FIELDS SEARCHED (IPC) |

The present search report has been drawn up for all claims

1

| Place of search | Date of completion of the search | Examiner |
|---|---|---|
| The Hague | 11 December 2014 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 17 3536

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2014

| Patent document cited in search report | Publication date | Patent family member(s) | Publication date |
|---|---|---|---|
| EP 2631260 A1 | 28-08-2013 | EP 2631260 A1 | 28-08-2013 |
| | | EP 2820069 A1 | 07-01-2015 |
| | | WO 2013127712 A1 | 06-09-2013 |
| US 2013197256 A1 | 01-08-2013 | NONE | |
| EP 2716719 A1 | 09-04-2014 | DE 102012109404 A1 | 03-04-2014 |
| | | EP 2716719 A1 | 09-04-2014 |
| | | WO 2014053510 A1 | 10-04-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **H. YANG et al.** A simple method for graphene production based on exfoliation of graphite in water using 1-pyrenesulfonic acid sodium salt. *Carbon,* 2013, vol. 53, 357-365
- **M. ZHANG et al.** Production of Graphene Sheets by Direct Dispersion with Aromatic Healing Agents. *small,* 2010, vol. x (x), 1-8
- **Y. XU et al.** Flexible Graphene Films via Filtration of Water-Soluble Noncovalent Functionalized Graphene Sheets. *J. AM. CHEM. SOC.,* 2008, vol. 130, 5856-5857
- **QI SU et al.** Composites of Graphene with Large Aromatic Molecules. *Adv. Mater.,* 2009, vol. 21, 3191-3195
- **BOEHM et al.** *Pure an Appl. Chemistry,* 1994, vol. 66, 1893-1901
- *Nature,* 2009, 367
- **M. CHOUCAIR et al.** *Nature Nanotechnology,* 2009, vol. 4, 30-33
- **BECERRIL et al.** Evaluation of solution processed reduced graphene oxide films as transparent conductors. *ACS Nano,* 2008, vol. 2 (3), 463-470